# FASCICULE DE BREVET EUROPEEN

(11) **EP 3 562 615 B1**
(45) Date de publication et mention de la délivrance du brevet: **27.01.2021**
(21) Numéro de dépôt: 17832265.7
(22) Date de dépôt: 21.12.2017
(51) Int. Cl.: B23K 26/08, B28D 5/00, B23K 26/122, B23K 26/362, B23K 26/38, B23K 26/402, C01B 32/25, B23K 103/00

(54) **PROCEDE D'USINAGE PAR LASER IMPULSIONNEL D'UN DIAMANT PERMETTANT D'OBTENIR UNE SURFACE LISSE ET TRANSPARENTE**
VERFAHREN MIT GEPULSTEM LASER ZUR BEARBEITUNG EINES DIAMANTEN ZUR HERSTELLUNG EINER GLATTEN UND TRANSPARENTEN OBERFLÄCHE
PULSED LASER METHOD FOR MACHINING A DIAMOND, MAKING IT POSSIBLE TO OBTAIN A SMOOTH AND TRANSPARENT SURFACE

(30) Priorité: 28.12.2016 FR 1663479
(43) Date de publication de la demande: 06.11.2019
(73) Titulaire: Commissariat à l'Energie Atomique et aux Energies Alternatives, 75015 Paris (FR)
(72) Inventeur: RUAUDEL, Eglantine, 91400 Orsay (FR); WECK, Gunnar, 78730 Rochefort En Yvelines (FR); PLISSON, Thomas, 91440 Bures-Sur-Yvette (FR)
(74) Mandataire: Santarelli
(86) Numéro de dépôt international: PCT/FR2017/053766
(87) Numéro de publication internationale: WO 2018/122503

(56) Documents cités:
- EP-A1- 1 535 698
- WO-A1-2015/195754
- WO-A2-2008/003052
- JP-A- 2008 214 170

## Description

L'invention concerne un procédé d'usinage par laser d'un diamant conformément au préambule de la revendication 1 (voir par exemple WO 2015/195754 A1), permettant d'obtenir une surface lisse et transparente.

### Domaines d'application

L'invention trouve notamment son application dans le domaine de l'ingénierie des diamants pour les expériences de physique. Des sociétés comme « Almax Easylab », « Technodiamant » ou « Element six » proposent des diamants percés de trous, de cônes ou de tranchées pour des expériences de physique.

D'autres applications de la découpe laser de diamants concernent la production de lentilles en diamant (les lentilles en diamant sont de plus en plus utilisées, en particulier sur les grands synchrotrons), l'usinage de substrats en diamant pour l'optique, l'électronique ou la micro fluidique, la joaillerie (découpe ou prédécoupe de diamants au laser, polissage des diamants au laser).

Mais, ainsi que cela est expliqué ci-dessous, les surfaces obtenues ne sont en pratique pas transparentes ; pourtant l'obtention de surfaces transparentes ouvrirait de nouvelles possibilités de commercialisation de produits.

### Etat de l'art sur l'usinage du diamant par laser

Traditionnellement la découpe des diamants se fait mécaniquement en utilisant les plans de clivage naturel du diamant ; la surface est ensuite polie jusqu'à obtenir une rugosité suffisamment faible pour que le diamant soit transparent.

Depuis longtemps, le laser est utilisé pour ablater, couper ou polir le diamant car cela permet un gain de temps important et une liberté dans la forme de découpe. En effet, les lasers usuellement utilisés peuvent être focalisés jusqu'à des surfaces très petites, typiquement 1 micron de côté, et permettent d'ablater le diamant suivant une forme quelconque, et non plus uniquement selon les plans de clivage cristallins. Cependant l'ablation au laser par les techniques actuelles présente l'inconvénient majeur, non seulement de générer des débris, mais aussi de transformer une part plus ou moins importante de la surface usinée en graphite noir. Un post traitement, par réaction chimique ou polissage mécanique reste alors nécessaire.

De nombreux spécialistes, groupes de recherches et industriels ont étudié la question de l'usinage du diamant et les procédés d'usinage présentés comme étant susceptibles de limiter l'apparition de graphite, combinent deux ingrédients principaux :
- L'utilisation d'un laser dont la durée d'impulsion est ultra-courte, typiquement inférieure à 10 ns [voir référence 1],
- L'usinage du diamant dans un milieu liquide, typiquement de l'eau ou un solvant organique.

Cependant les surfaces obtenues par usinage laser comportent toujours du graphite en plus ou moins grande quantité. Une revue récente (2013) sur l'usinage laser du diamant dans l'air [1] (p423) explique : « The problem is relatively complicated because, in being laser-ablated, the surface will have a poor degree of smoothness and will be covered by a graphitized layer. ».

En procédant à l'usinage dans l'eau, certaines sources mentionnent l'obtention de "surfaces non affectées thermiquement" ou de "surfaces sans graphite". Cependant, lorsque des données sont fournies, on constate qu'une petite couche de graphite reste présente. La transparence de la surface n'est d'ailleurs jamais évoquée ou démontrée ; dans diverses études récentes [références 2-4], à caractère principalement expérimental et où la spécificité du diamant n'est pas toujours bien prise en compte, seuls des sillons sont creusés et il n'y a pas de données sur les propriétés de transparence des surfaces usinées. S'il est montré que le volume de graphite créé est réduit avec l'usinage dans l'eau, rien ne permet de conclure à son absence et, surtout, que la surface obtenue est suffisamment lisse et dépourvue de graphite pour que cette surface soit transparente, en l'absence de tout traitement ultérieur de finition.

Par contre, si on examine les documents mis à disposition par les entreprises commercialisant des diamants usinés par laser, on est amené à conclure que les surfaces ne sont pas suffisamment lisses et/ou dépourvues de graphite pour pouvoir être transparentes. Ainsi, par exemple, l'entreprise « Synova » propose un usinage laser dans lequel le faisceau laser est guidé dans un jet d'eau ; outre le fait que la taille du faisceau laser est intrinsèquement trop importante pour les applications en micro-usinage, on lit, dans leur brochure commerciale, en rapport à la qualité de surface des échantillons : « Very smooth side walls with extremely thin black layer that is easily cleaned off. ».

De même, on a pu constater que les diamants usinés distribués par la société « Almax Easylab, qui commercialise des diamants usinés au laser pour les expériences de physique, ne répondent pas non plus à cette condition d'être suffisamment lisse et dépourvue de graphite pour être transparente.

Pourtant il serait très utile de disposer de diamants monocristallins dont les surfaces ont été usinées par laser d'une manière à ce que, sans traitement ultérieur, elles soient transparentes.

Il est à noter qu'il est actuellement possible d'obtenir, sur des diamants monocristallins, des surfaces transparentes et très lisses, mais en utilisant des techniques d'usinage sans laser, par exemple avec un faisceau d'ions focalisé, mais de telles techniques ont pour inconvénients d'avoir un temps important de mise en œuvre et un coût très élevé.

Il a été mentionné ci-dessus qu'il pouvait être nécessaire d'appliquer un traitement ultérieur pour retirer le graphite après l'usinage, typiquement par polissage mécanique traditionnel ou par des réactions chimiques ou photochimiques, impliquant par exemple de l'ozone ou des réactions laser induites par laser UV [5]. Cependant un tel traitement ultérieur n'a été utilisé avec succès que dans le cas d'un usinage de très faible profondeur (<1 micron). Au-delà, le graphite créé durant l'usinage perturbe l'usinage lui-même et les formes obtenues présentent des irrégularités importantes.

Il apparaît donc qu'il n'existe pas actuellement de technique d'usinage laser de diamants, sur une profondeur significative (supérieure à 1, voire 5 microns), permettant d'obtenir, de préférence sans traitement additionnel, des surfaces usinées qui, tout en étant aux bonnes cotes, sont suffisamment lisses et dépourvues de graphite pour être transparentes.

### Présentation de l'invention

L'invention propose un procédé de taille directe d'un diamant au laser en profondeur laissant une surface qui est transparente à la lumière visible sans post-traitement.

L'invention propose à cet effet, un procédé d'usinage d'un diamant au moyen d'un laser impulsionnel tel que défini dans la revendication 1, selon lequel
- on place le diamant dans un récipient contenant un liquide transparent dont le niveau est situé au moins à 100 microns au-dessus d'une surface du diamant qui est à usiner, on active une source laser en sorte d'appliquer à la surface à usiner un faisceau laser ayant des impulsions de durée au plus égale à une microseconde à une fréquence de répétition d'au plus 5 kHz,
- on commande un balayage relatif entre le diamant et la source laser, transversalement au faisceau laser et axialement en profondeur, avec une amplitude et des orientations déterminées par la forme de l'usinage à réaliser dans le diamant.

Le procédé repose sur plusieurs éléments. Conformément aux enseignements de l'état de la technique commenté ci-dessus, il combine l'utilisation d'un laser ultra court (c'est-à-dire à impulsions ultra-courtes) avec la présence d'un liquide dans lequel se fait l'usinage (ou ablation).

Toutefois, le procédé implique des conditions sur la fréquence de répétition des impulsions ultra-courtes, avantageusement combinées à des conditions sur le liquide dans lequel baigne le diamant à usiner.

Plus précisément, la fréquence des impulsions du laser doit être plus faible que dans l'état de la technique, alors qu'on pouvait penser au contraire que, pour avoir une surface bien lisse, il fallait une fréquence de répétition élevée pour avoir un usinage aussi continu que possible à une vitesse de déplacement donnée.

Par ailleurs, il est apparu que la présence d'un tensio-actif dans le liquide avait, de manière surprenante, un effet favorable à la qualité de la surface obtenue, jusqu'à la transparence.

L'invention repose sur l'ajustement de la fréquence de répétition du laser c'est-à-dire l'espacement temporel des impulsions successives qui enlèvent la matière, favorablement complété par l'introduction d'un tensio-actif. Cette fréquence de répétition doit être inférieure à quelques kiloHertz (typiquement moins de 5 kHz, voire moins de 2 kHz) et idéalement inférieure à 1 kiloHertz, voire 500 Hz. Cela correspond à laisser, entre deux impulsions successives, un temps au moins égal à de l'ordre d'une milliseconde (ou même de plusieurs millisecondes).

La polarisation du laser est choisie circulaire, ou à défaut elliptique mais le plus proche possible d'une polarisation circulaire.

L'introduction du tensio-actif améliore la qualité du résultat obtenu en cela qu'il réduit le ménisque présent à la surface du liquide et rend la surface usinée plus lisse. La présence du tensio-actif permet également de conserver la qualité de l'usinage à des fréquences de répétition du laser plus élevées, au-delà de 500 Hertz, et d'atteindre des fréquences de quelques kiloHertz (typiquement 5 kiloHertz), tout en conservant les propriétés de transparence de la surface usinée.

Selon des caractéristiques avantageuses de l'invention :
- le liquide (typiquement de l'eau pure et/ou déminéralisée, ou d'une solution aqueuse, notamment) contient un additif tensio-actif ; il peut notamment s'agir d'un additif tensio-actif de type polyoxyéthylène.
- le liquide contient en outre un sel minéral à une teneur au plus égale à 10% en masse ; il peut notamment s'agir de chlorure de sodium.
- le liquide est mis en mouvement par une agitation mécanique.
- le niveau du liquide au-dessus de la surface à usiner est au moins égal à 100 microns (de préférence 200 microns) et au plus égal à trois millimètres (de préférence un millimètre).
- la durée d'impulsion est comprise entre 100 femtosecondes et 100 picosecondes, de préférence au plus égale à 1 picoseconde, voire 500 femtosecondes, pour une fréquence de répétition comprise entre 100 Hz et 1 kHz, voire 200 et 800 Hz.
- la longueur d'onde du faisceau laser est comprise entre 500 et 530 nm.
- la polarisation du laser est circulaire.
- le balayage est commandé avec un pas au plus égal à 10 microns, voire 1 micron, transversalement au faisceau et axialement entre deux cycles de balayage transversal.
- l'usinage est effectué sur une profondeur d'au moins 10 microns, en un ou plusieurs cycles.
- l'objectif de focalisation est un objectif à immersion plongé directement dans le liquide utilisé.

### Description de l'invention

Des objets, caractéristiques et avantages de l'invention ressortent de la description qui suit, donnée à titre d'exemple illustratif non limitatif, en regard des dessins sur lesquels :
- La figure 1 est un schéma de principe d'un dispositif de mise en œuvre de l'invention,
- La figure 2 est une vue au microscope électronique à balayage d'une cuvette transparente usinée dans un diamant conformément au procédé de l'invention,
- La figure 3 est un graphique montrant des spectres Raman obtenus sur une surface non usinée d'un diamant et au fond d'une cuvette conforme à la figure 2,
- La figure 4 est un graphique d'interférence obtenu en lumière blanche entre le fond d'une telle cuvette et une surface non usinée du diamant,
- La figure 5 est un signal de spectroscopie enregistré pour un échantillon placé dans une telle cuvette, et
- La figure 6 est une image optique de fibres de papier placées sous un diamant dans lequel ont été usinées de multiples cuvettes, obtenues de manière classique (opaques) ou conformément à l'invention (transparentes).

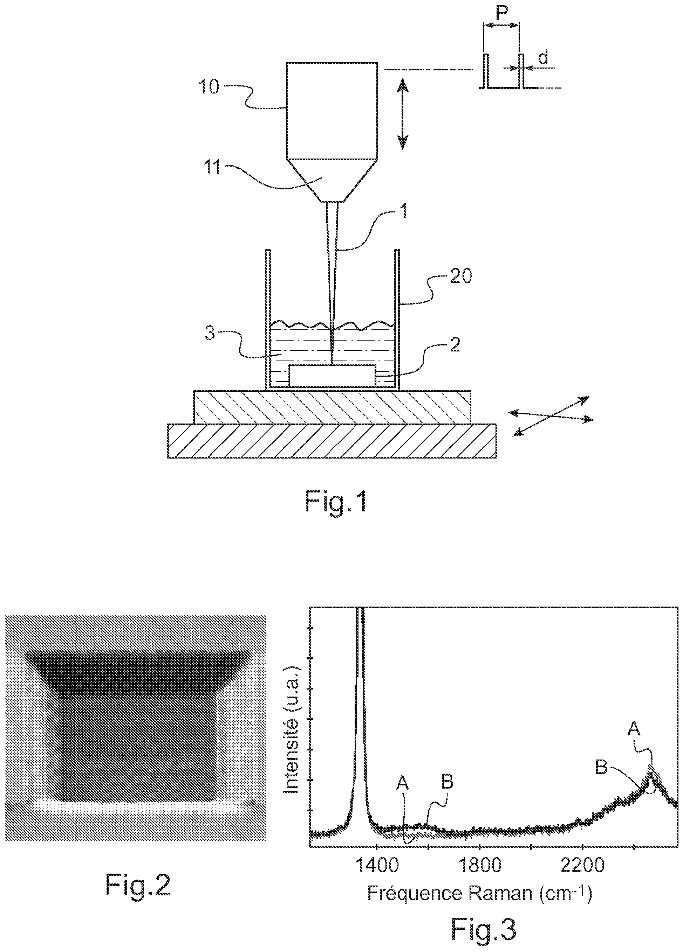

Ainsi que cela est schématisé sur la figure 1, le procédé de l'invention comporte la mise en œuvre d'une source laser 10 de type impulsionnel, de polarisation circulaire ou elliptique se rapprochant d'une polarisation circulaire, émettant des micro-impulsions de durées d au plus égales à la microseconde, de préférence au plus égales à 500 picosecondes (voire moins de 100 picosecondes, voire inférieure à la picoseconde), à une fréquence de répétition d'au plus 5 kilohertz, de préférence au plus égale à 1 kilohertz.

Cette source laser est connectée à un objectif de focalisation 11 permettant de régler la concentration du faisceau laser 1 sur un échantillon noté 2. Dans l'exemple représenté, l'optique de focalisation est un objectif fonctionnant dans l'air ; en variante non représentée, il peut s'agir d'un objectif « à immersion », c'est-à-dire conçu pour être directement immergé dans le liquide (auquel cas, le faisceau issu de cet objectif se propage entièrement dans le liquide).

Cet échantillon 2 est placé dans un récipient 20, contenant un liquide transparent 3 dans lequel baigne cet échantillon et situé en regard de l'optique de focalisation. En pratique, la position en hauteur de cette optique est réglable en hauteur par rapport à l'échantillon (c'est-à-dire que la position de l'un et/ou l'autre est réglable par rapport à l'autre), ce qui est schématisé par une double flèche verticale sur la figure 1. Ce réglage permet de concentrer le faisceau laser sur la surface à usiner de l'échantillon.

L'échantillon 2 est un diamant monocristallin ou polycristallin (par exemple nanocristallin), naturel ou synthétique, qui est avantageusement fixé à un support, ici constitué par le fond du récipient, par exemple par collage.

Si l'objectif utilisé est un objectif à immersion, le niveau de liquide au-dessus de l'échantillon est au moins égal à la distance entre l'objectif et la surface de l'échantillon lorsque celle-ci est au point focal de l'objectif, c'est-à-dire lorsque le laser est focalisé par l'objectif sur la surface de l'échantillon.

Si l'objectif utilisé fonctionne dans l'air, le niveau de liquide utilisé doit être adapté en fonction du récipient, de la distance de focalisation de l'objectif et de la durée de l'usinage. Le niveau de liquide doit être typiquement supérieur à 100 microns, de préférence au moins égal à 200 microns. Le niveau de liquide à ne pas dépasser est déterminé par l'apparition de mouvements de la surface du liquide (formation de petites vagues, typiquement, qui nuiront à la qualité de l'usinage. Des hauteurs de liquide de plusieurs millimètres (typiquement 3 mm) ont pu être utilisées dans des récipients adaptés, par exemple une petite coupelle dans laquelle était placé un morceau de métal pour briser la formation de vagues. Une limite encore supérieure est la distance à l'objectif qui ne doit évidemment pas être dépassée si celui-ci n'est pas un objectif à immersion. Une telle distance peut ainsi, notamment, être choisie entre 100 microns et 3mm, par exemple entre 200 microns et de l'ordre d'un millimètre.

En pratique la longueur d'onde est avantageusement choisie en fonction du liquide utilisé de manière à minimiser son absorption par ce liquide avant d'atteindre la surface à usiner.

La puissance du laser utilisé est choisie en sorte que la fluence du faisceau dépasse le seuil d'ablation du diamant dans le liquide (dans le cas de l'eau, typiquement 5 Joules par centimètres carrés) ; en pratique une fluence de 80 joules par centimètres carrés donne de très bons résultats (à 5 à 10 J/cm² près).

Ce liquide transparent est typiquement essentiellement constitué d'eau, en pratique de l'eau déminéralisée.

Toutefois, en variante, ce liquide transparent peut aussi être une solution aqueuse contenant un acide ou une base, par exemple de l'hydroxyde de potassium en solution aqueuse, ou encore de l'eau oxygénée, voire des hydrocarbures transparents.

Ce liquide transparent a avantageusement des propriétés tensio-actives ; c'est ainsi qu'il s'agit avantageusement d'eau contenant un additif tensio-actif. Ces propriétés tensio-actives sont apparues améliorer les conditions d'usinage, et permettre notamment d'augmenter sensiblement la fréquence de répétition du laser (typiquement de 500 Hz à 5kHz) tout en conservant la transparence de la surface usinée (sans dépôt de graphite).

Il peut ainsi s'agir d'un additif du type à chaines d'oxyde d'éthylène (c'est-à-dire un polyoxyethylène).

Il s'agit par exemple de l'additif C₁₄H₂₂O(C₂H₄)n tel que celui vendu par Dow Chemical Company sous la marque « Triton X-100 © » ; un tel additif tensio-actif non-ionique a l'avantage d'être transparent, incolore et non moussant.

Mais les avantages d'un effet tensio-actif ont aussi été observés avec quelques gouttes d'un simple liquide vaisselle commercialisé sous la marque « Paic ©», démontrant ainsi que tous types de tensio-actif (non-ionique comme le « Triton X-100 © » ou essentiellement anionique comme le « Paic ©») produisent l'effet recherché sur l'usinage laser du diamant.

Toutefois, l'additif tensio-actif choisi est avantageusement sélectionné par ses propriétés de transparence, et son absence de pouvoir moussant, afin de perturber le moins possible le passage du laser dans le liquide. Il est présent à une teneur suffisante pour que l'effet détergent soit obtenu sans toutefois dépasser un seuil qui réduirait la transparence du liquide ce qui est typiquement le cas de concentrations comprises entre 0.05 et 0.2 % en volume pour le « Triton X-100 © ».

Il est apparu qu'une agitation du liquide (de préférence modérée en sorte de ne pas créer de mouvements de surface significatifs) avait un effet bénéfique sur l'usinage, allant dans le même sens que celle de l'introduction du tensio-actif, à savoir une amélioration du processus d'usinage, permettant d'augmenter la fréquence de répétition des impulsions laser pour une même qualité d'usinage.

Il est également apparu que la présence d'un sel minéral, tel que le chlorure de sodium, avait un effet bénéfique sur la suppression de tout dépôt de graphite et sur la profondeur possible d'usinage et sur la minimisation de la rugosité de la surface usinée.

Un tel sel peut être présent à une teneur pouvant atteindre 10%, de préférence comprise entre 3 et 7% en masse ;
L'usinage du diamant consiste en pratique à effectuer un balayage relatif entre la source laser et l'échantillon, la taille de l'impact du faisceau laser sur l'échantillon étant sensiblement plus faible que la taille de la zone à creuser ; à titre d'exemples non limitatifs, si la zone à usiner a une taille typique de 100 microns (il s'agit par exemple de la longueur d'un côté de polygone, ou d'une dimension maximale, notamment), on pourra utiliser un faisceau focalisé sur 1 micron carré ; si la zone a une taille caractéristique d'un millimètre, le faisceau pourra être focalisé sur 10 microns carrés seulement. L'amplitude et les orientations du balayage définissent la géométrie de la zone usinée.

L'énergie du faisceau et la vitesse de balayage définissent la profondeur qui peut être creusée à chaque cycle de balayage ; cette profondeur est typiquement de l'ordre de 1 à 10 microns, ou au moins supérieure à 0.1 micron.

Le balayage peut être obtenu en déplaçant l'optique de focalisation par rapport à l'échantillon ou en déplaçant l'échantillon sous l'optique de focalisation (ou la combinaison de ces mouvements) ; cela est schématisé par les doubles flèches croisées, horizontales, représentées près du support du récipient. Ces mouvements sont par exemple réalisés à l'aide de platines de déplacement pour déplacer l'échantillon et/ou par des têtes galvanométriques pour déplacer le faisceau laser par rapport à l'échantillon.

Il faut noter que la notion de fréquence de répétition est à définir localement, en relation avec l'usinage successif de zones adjacentes ; c'est ainsi que le balayage peut se faire en parallèle selon deux trajectoires distinctes, en des emplacements par exemple séparés d'une distance valant au moins une dizaine de fois la taille du faisceau d'usinage (par exemple deux trajectoires parallèles ou selon deux portions d'une même trajectoire), en profitant de la possibilité de changer rapidement l'orientation du faisceau par une commande appropriée des têtes galvanométriques.

La figure 2 montre le résultat d'un usinage d'une cuvette dans un diamant ; les parois présentent des stries qui semblent devoir être attribuées aux cycles successifs de balayage. Par contre, le fond apparait très lisse, sans la moindre strie décelable à ce grossissement (dans l'exemple considéré, la cuvette a quelques dizaines de microns de côté).

Un examen visuel de cette cuvette a en outre permis de constater que la surface usinée est transparente quand elle est éclairée par une lumière en transmission ce qui tend à confirmer le caractère très lisse du fond de la cuvette mais aussi l'absence de tout dépôt de graphite lors de l'usinage.

La qualité du résultat est caractérisée par les figures 3 à 6.

Ainsi, la figure 3 représente un spectre de spectroscopie Raman de la surface pour laquelle le signal caractéristique du graphite est absent. La courbe en gris (notée A) est le spectre Raman du diamant naturel avant la découpe au laser, celle en noir (notée B) est le spectre du diamant au niveau du fond de la cuvette creusée au laser sur une profondeur de 20 micromètres. La bosse autour de 1600 cm-1 a été attribuée à la présence locale de diamant nanocristallin [6]. Il n'y a donc pas de graphite formé lors de l'usinage selon le procédé de l'invention.

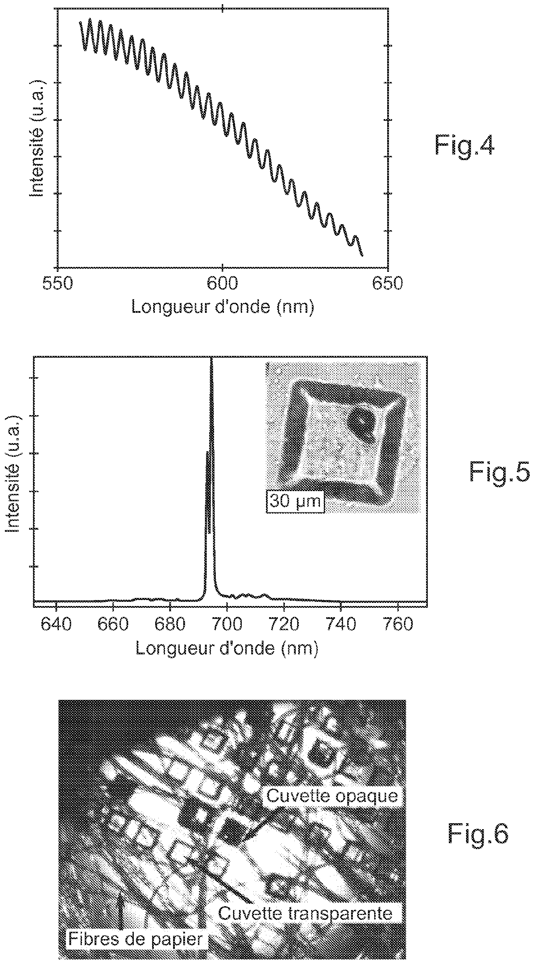

La transparence de la surface du fond de la cuvette peut être confirmée par la figure 4 qui représente un spectre d'interférence en lumière blanche pris entre la surface d'un diamant non usiné de référence et d'une surface usinée par notre procédé ; la possibilité d'observer des franges d'interférence témoigne de la transparence de la surface du fond de la cuvette, mais aussi de sa parfaite planéité. La transparence d'une surface usinée selon le procédé de l'invention est donc telle qu'elle permet de procéder à des études spectrales en faisant passer un laser au travers de la cuvette.

Cette transparence est confirmée par la figure 5 qui est une courbe de spectroscopie obtenue pour un corps étranger observé au travers d'une surface usinée par laser conformément à l'invention. Plus précisément, la surface usinée est une petite cuvette comme celle de la figure 2. On place dans cette cuvette un rubis. Le signal de spectroscopie présenté a été obtenu à travers le diamant, c'est-à-dire que le laser excitateur tout comme le signal émis par le rubis ont traversé la surface usinée (depuis l'arrière de l'échantillon de la figure 2, et vers l'arrière de cet échantillon, respectivement). On constate que les propriétés de transparence de l'usinage permettent d'obtenir un signal de spectroscopie à travers la surface usinée.

La photographie de la figure 6 montre un diamant monocristallin dans lequel diverses cuvettes ont été usinées et sous lequel ont été disposées des fibres de papier : on distingue des cuvettes usinées par un procédé classique, ici par laser mais dans l'air, c'est-à-dire sans liquide (elles apparaissent comme étant sombres, ne permettant pas de voir quoi que ce soit au travers de la portion sous-jacente du diamant) et des cuvettes transparentes, permettant de voir des fibres de papier sous-jacentes, toutes obtenues par le procédé de l'invention.

Il est ainsi confirmé que le procédé de l'invention permet d'obtenir une surface d'usinage transparente exempte de graphite noir. La surface est également suffisamment lisse pour qu'on puisse observer un objet à travers une toute petite cuvette obtenue par ce procédé. Il est également possible d'effectuer des mesures de spectroscopie (laser, ou par absorption d'une lumière blanche ou infrarouge, notamment) à travers la surface, et même des expériences d'interférence.

Il est important de noter que, en évitant d'avoir à effectuer un post-traitement chimique ou mécanique après l'usinage, le procédé permet de diversifier les géométries qu'il est possible d'usiner avec la rapidité du laser. En particulier l'invention permet d'usiner au laser des formes concaves comme les cuvettes décrites ci-dessus tout en obtenant les caractéristiques de propreté et de géométrie qui garantissent que les surfaces usinées sont transparentes. On comprend aisément que, si un dépôt de graphite s'était formé dans une cuvette telle que celle de la figure 2, un traitement ultérieur visant à l'éliminer aurait été très difficile à effectuer, et aurait très certainement altéré les cotes d'usinage.

A titre d'exemple, l'invention a été mise en œuvre avec les conditions opératoires suivantes qui ont permis d'obtenir des cuvettes telles que décrites précédemment et présentées sur la Figure 6 :
- Laser de marque « Amplitude systèmes» et de modèle « SATSUMA » délivrant des impulsions de 300 femto-secondes, de longueur d'onde de 515nm, et utilisé à une énergie par impulsion de 5 micro-Joules, avec une fréquence de répétition de 500 Hertz et une polarisation circulaire.
- Objectif de focalisation : objectif de grossissement x10 de marque « Thorlabs », avec une ouverture numérique de 0,25.
- Balayage horizontal de l'échantillon par lignes espacées de 0,8 micromètres et descente verticale par pas de 0,5 micromètres piloté par des platines de marque « Jenny-Science », l'ensemble du système d'usinage ayant été intégré et interfacé par la société « OPTEC ».
- Liquide utilisé : une solution à base de 4mL d'eau déminéralisée, 0,2 grammes de chlorure de sodium et 0.1 millilitre de Triton x100 (agent tensio-actif) dilué à 5% dans l'eau déminéralisée ; une hauteur de liquide d'environ 0,7mm dans un récipient de 2cm de diamètre.

On comprend que, ces conditions ayant abouti à un usinage optimal, il est à la portée de l'homme de métier de s'en inspirer pour, en modifiant l'un ou l'autre des paramètres, en déduire un autre compromis optimal.

Ainsi, notamment, on peut avantageusement :
- faire varier la durée des impulsions entre 100 femtosecondes et plusieurs dizaines de picosecondes, pour une fréquence de répétition comprise entre 200 Hz et 1kHz,
- choisir une longueur d'onde allant du proche infrarouge au proche UV. ,
- modifier le pas du balayage ; on comprend que, plus le faisceau laser est focalisé sur une petite surface, plus on peut choisir un pas faible, par exemple de l'ordre de la moitié du diamètre de ce faisceau,
- Utiliser un objectif à immersion plongé directement dans le liquide d'usinage.

Le procédé est particulièrement applicable pour l'usinage de diamants sur une profondeur cumulée d'au moins une dizaine de microns.

Les exemples décrits ci-dessus concernent des diamants monocristallins. En variante le procédé peut être mis en œuvre avec des diamants polycristallins, par exemple nanocristallins (il est à noter que, dans un tel cas, important d'un point de vue pratique, un polissage mécanique est inefficace) ; aucune différence n'a été constatée entre des diamants naturels et des diamants synthétiques.

### Références bibliographiques

[1] "Optical engineering of diamond", R.P. Mildren et J.R. Rabeau, Wiley-CH, (chapitre 12 : Laser micro- and nanoprocessing of diamond materials), (2013).
[2] "Laser processing of diamonds and sintered c-BN in liquid", H.Miyazawa et M. Murakawa, New diamond and frontier technology, 10, 3200 (2001).
[3] "Laser-assisted etching of diamonds in air and in liquid média", G.A. Shafeev, E.D. Obraztsova et S.M. Pimenov Mater. Sci. Eng. B-Solid State Mater. Adv. Technol. 46, 129-132 (1997).
[4] "Underwater and water-assisted laser processing : Part2 - Etching, cutting and rarely used methods", A. Kruusing, Optics and lasers Engineering , 41, 333 (2004)
[5] "Laser patterning of diamond part II surface nondiamond carbon formation and its removal", Smedley et al, Journal of applied Physics, 105, 123108 (2009).
[6] "Detecting sp2 phase on diamond surfaces by atomic force microscopy phase imaging and its effect on surface conductivity", Kozak et al, Diamond & related materials, 18, 722-725, (2009).

## Revendications

1. Procédé d'usinage d'un diamant au moyen d'un laser impulsionnel selon lequel :
- on place le diamant dans un récipient contenant un liquide transparent dont le niveau est situé au moins à 100 microns au-dessus d'une surface du diamant qui est à usiner, on active une source laser,
- on commande un balayage relatif entre le diamant et la source laser, transversalement au faisceau laser et axialement en profondeur, avec une amplitude et des orientations déterminées par la forme de l'usinage à réaliser dans le diamant,
**caractérisé en ce que** l'on active une source laser en sorte d'appliquer à la surface à usiner un faisceau laser ayant des impulsions de durée au plus égale à une microseconde à une fréquence de répétition d'au plus 5 kHz.

2. Procédé selon la revendication 1, dans lequel le liquide contient un additif tensio-actif.

3. Procédé selon la revendication 2, dans lequel l'additif tensio-actif est de type polyoxyéthylène.

4. Procédé selon l'une quelconque des revendications 1 à 3, dans lequel le liquide contient en outre un sel minéral à une teneur au plus égale à 10% en masse.

5. Procédé selon la revendication 4, dans lequel le sel minéral est du chlorure de sodium.

6. Procédé selon l'une quelconque des revendications 1 à 5, dans lequel le liquide est mis en mouvement par une agitation mécanique.

7. Procédé selon l'une quelconque des revendications 1 à 6 dans lequel le niveau du liquide au-dessus de la surface à usiner est au moins égal à 100 microns et au plus égal à trois millimètres.

8. Procédé selon l'une quelconque des revendications 1 à 7, dans lequel la durée d'impulsion est comprise entre 100 femtosecondes et 100 picosecondes pour une fréquence de répétition comprise entre 100 et 1000 Hz.

9. Procédé selon l'une quelconque des revendications 1 à 8 dans lequel la longueur d'onde du faisceau laser est comprise entre 500 et 530 nm.

10. Procédé selon l'une quelconque des revendications 1 à 9, dans lequel le balayage est commandé avec un pas au plus égal à 10 microns, transversalement au faisceau et axialement entre deux cycles de balayage transversal.

11. Procédé selon l'une quelconque des revendications 1 à 10, dans lequel la polarisation du laser est circulaire.

12. Procédé selon l'une quelconque des revendications 1 à 11, dans lequel l'usinage est effectué sur une profondeur d'au moins 10 microns, en un ou plusieurs cycles.

13. Procédé selon l'une quelconque des revendications 1 à 12, dans lequel l'objectif de focalisation est un objectif à immersion plongé directement dans le liquide utilisé.

## Patentansprüche

1. Verfahren zur Bearbeitung eines Diamanten mittels eines gepulsten Lasers, wobei:
der Diamant in einen Behälter gegeben wird, der eine transparente Flüssigkeit enthält, deren Füllstand mindestens 100 Mikrometer über einer Oberfläche des zu bearbeitenden Diamanten liegt, eine Laserquelle aktiviert wird,
eine relative Abtastung zwischen dem Diamanten und der Laserquelle quer zum Laserstrahl und axial in der Tiefe gesteuert wird, wobei eine Amplitude und Orientierungen durch die Form der im Diamanten auszuführenden Bearbeitung bestimmt werden,
**dadurch gekennzeichnet, dass**
eine Laserquelle aktiviert wird, um auf die zu bearbeitende Oberfläche einen Laserstrahl mit Impulsen mit einer Dauer von höchstens einer Mikrosekunde bei einer Wiederholungsfrequenz von höchstens 5 kHz aufzubringen.

2. Verfahren nach Anspruch 1, wobei die Flüssigkeit ein Tensidadditiv enthält.

3. Verfahren nach Anspruch 2, wobei das Tensidadditiv vom Polyoxyethylentyp ist.

4. Verfahren nach einem der Ansprüche 1 bis 3, wobei die Flüssigkeit auch ein Mineralsalz mit einem Gehalt von höchstens 10 Massen-% enthält.

5. Verfahren nach Anspruch 4, wobei das Mineralsalz Natriumchlorid ist.

6. Verfahren nach einem der Ansprüche 1 bis 5, wobei die Flüssigkeit durch mechanisches Rühren in Bewegung gesetzt wird.

7. Verfahren nach einem der Ansprüche 1 bis 6, wobei der Füllstand der Flüssigkeit über der zu bearbeitenden Oberfläche mindestens 100 Mikrometer und höchstens drei Millimeter beträgt.

8. Verfahren nach einem der Ansprüche 1 bis 7, wobei die Pulsdauer zwischen 100 Femtosekunden und 100 Pikosekunden für eine Wiederholungsfrequenz zwischen 100 und 1000 Hz liegt.

9. Verfahren nach einem der Ansprüche 1 bis 8, wobei die Wellenlänge des Laserstrahls zwischen 500 und 530 nm liegt.

10. Verfahren nach einem der Ansprüche 1 bis 9, wobei das Abtasten mit einem Abstand von höchstens 10 Mikrometern quer zum Strahl und axial zwischen zwei Querabtastzyklen gesteuert wird.

11. Verfahren nach einem der Ansprüche 1 bis 10, wobei die Laserpolarisation zirkulär ist.

12. Verfahren nach einem der Ansprüche 1 bis 11, wobei die Bearbeitung bis zu einer Tiefe von mindestens 10 Mikrometern in einem oder mehreren Zyklen durchgeführt wird.

13. Verfahren nach einem der Ansprüche 1 bis 12, wobei das Fokussierobjektiv ein Tauchobjektiv ist, das direkt in die verwendete Flüssigkeit eingetaucht ist.

## Claims

1. A method of machining a diamond by means of a pulsed laser comprising:
- placing the diamond in a receptacle containing a transparent liquid of which the level is located at least 100 microns above a surface of the diamond which is to be machined, activating a laser source,
- actuating relative scanning between the diamond and the laser source, transversely to the laser beam and axially depthwise, with an amplitude and orientations that are determined by the shape of the machining to perform on the diamond,
**characterized in that** the laser source is activated so as to apply to the surface to machine a laser beam having pulses of duration at most equal to one microsecond at a repetition frequency of at most 5 kHz.

2. A method according to claim 1, wherein the liquid contains a surfactant additive.

3. A method according to claim 2, wherein the surfactant additive is of the type polyoxyethylene.

4. A method according to any one of claims 1 to 3, wherein the liquid furthermore contains a mineral salt in an amount at most equal to 10% by mass.

5. A method according to claim 4, wherein the mineral salt is sodium chloride.

6. A method according to any one of claims 1 to 5, wherein the liquid is made to move by mechanical stirring.

7. A method according to any one of claims 1 to 6 wherein the level of the liquid above the surface to machine is at least equal to 100 microns and at most equal to three millimeters.

8. A method according to any one of claims 1 to 7, wherein the pulse duration is comprised between 100 femtoseconds and 100 picoseconds for a repetition frequency comprised between 100 and 1000 Hz.

9. A method according to any one of claims 1 to 8 wherein the wavelength of the laser beam is comprised between 500 and 530 nm.

10. A method according to any one of claims 1 to 9, wherein the scanning is actuated with a step size at most equal to 10 microns, transversely to the beam and axially between two transverse scanning cycles.

11. A method according to any one of claims 1 to 10, wherein the polarization of the laser is circular.

12. A method according to any one of claims 1 to 11, wherein the machining is carried out to the depth of at least 10 microns, in one or more cycles.

13. A method according to any one of claims 1 to 12, wherein the focusing objective is an immersion objective submerged directly in the liquid used.
